# EUROPÄISCHE PATENTANMELDUNG

(11) **EP 2 230 268 A1**
(43) Veröffentlichungstag der Anmeldung: **22.09.2010**
(21) Anmeldenummer: 09003792.0
(22) Anmeldetag: 17.03.2009
(51) Int. Cl.: C08K 3/00, C08J 3/00

(54) **VOC-arme Polymer-Feststoffe**

(71) Anmelder: Bayer MaterialScience AG, 51368 Leverkusen (DE)
(72) Erfinder: Achten, Dirk Dr., 51375 Leverkusen (DE); Kueker, Peter, 50931 Köln (DE); Kempkes, Juergen, 51069 Köln (DE); Lorenz, Bianka, 41539 Dormagen (DE)

(57) **Zusammenfassung**

Die Erfindung betrifft ein Verfahren zur Herstellung VOC-armer Polymer-Feststoffe sowie die nach diesem Verfahren hergestellten Produkte und deren Verwendung zur Herstellung von Kautschukvulkanisaten und Klebstoffen.

## Beschreibung

Die Erfindung betrifft ein Verfahren zur Herstellung VOC-armer Polymer-Feststoffe sowie die nach diesem Verfahren hergestellten Produkte und deren Verwendung zur Herstellung von Kautschukvulkanisaten und Klebstoffen.

Die Polychloroprenherstellung ist seit langem bekannt, sie erfolgt durch Emulsions-polymerisation im alkalischen wässrigen Medium wie z.B. beschrieben in "Ullmanns Encyclopädie der technischen Chemie", Band 9, S. 366, Verlag Urban. Darauf aufbauend gibt es eine Vielzahl von Stand der Technik zur Veränderung der Zusammensetzung der Polymere, wie zum Beispiel (Block)-Copolymerisation, Funktionalisierungen sowie polymeranaloge Reaktionen wie Hydrolyse und Grafting sowie auch Abmischung mit anderen Produkten wie Füllstoffen, Stabilisatoren, Weichmachern, Aufrahmungs- und Netzmitteln oder anderen Polymerdispersionen.

Im Anschluss an die Polymerisation werden die so erhaltenen Polymerdispersionen (der Begriff Dispersion wird im Folgenden mit Latex gleichgesetzt) zur Herstellung von Feststoffen einer Koagulation unterworfen. Das technisch gebräuchliche Verfahren hierzu verwendet eine wasserlösliche organische oder anorganische Säure in erheblicher wässriger Verdünnung zwecks pH-Reduzierung auf einen pH-Wert < 9. Die so erhaltenen destabilisierten Produkte werden üblicherweise an einer Gefrierkoagulationswalze kontinuierlich abgeschieden und von dieser kontinuierlich als Folie abgeschabt, im Anschluss aufwendig gewaschen, um überschüssige Salze und Säuren zu entfernen, und abschließend in einem vertikalen oder horizontalen Ofen getrocknet. Der gesamte Aufarbeitungsprozess läuft dabei nach einem kontinuierlichen Verfahren ab. In einem alternativen Verfahren kann der Latex auch klassisch mit Hilfe von Säuren und/oder anorganischen, wasserlöslichen Salzen koaguliert und die erhaltenen Krümel mittels einer Entwässerungsschnecke getrocknet werden.

Allen diesen Verfahren des Standes der Technik ist gemeinsam, dass entweder aufwändige und stark wasserverbrauchende Verfahren zur Entfernung von Salzen und organischen Säuren aus dem Fällungsprozess durchgeführt werden müssen oder das erhaltene Produkt nur mit oft minderwertiger Qualität, wie z.B. eine erhöhte Wasserquellung, erhöhte VOC-Konzentration, schlechtere Alterungsstabilität, höhere Farbzahlen oder von der Norm abweichendes Vulkanisationsverhalten, aufgrund der verbleibenden Salz und Säurefracht behaftet ist. Weiterer Nachteil des Einsatzes der genannten Fällstoffe ist eine Verdünnung und unkontrollierte Fällung der in diesem Zustand extrem klebrigen Produkte, mit der daraus resultierenden Notwendigkeit häufiger und aufwendiger Reinigungszyklen der Fällanlagen.

Polychloropren wird entweder nach entsprechender Compoundierung und Vulkanisation zur Herstellung von technischen Gummiartikeln verwendet oder es wird als Kontaktklebstoffrohstoff eingesetzt.

Aufgabe war es also ein Verfahren zu entwickeln, dass die genannten Nachteile nicht hat, sowie ein Produkt mit nach obigen Kriterien verbesserter Qualität bereitzustellen.

Überraschenderweise wurde nun gefunden, dass Polymerlatices, die mit einem pH > 9 produziert werden, sich vorteilhaft mittels Zugabe von gasförmigen Kohlendioxid auf einen pH-Wert, je nach Aufarbeitungsmethode, von 6-9 einstellen lassen.

Gegenstand der vorliegenden Anmeldung ist somit ein Verfahren zur Herstellung von Feststoffen ausgehend von Polymerlatices, **dadurch gekennzeichnet, dass** die Polymer-Dispersion mit einem Ausgangs-pH-Wert größer 9 mittels gasförmigen Kohlendioxids auf einen pH-Wert von 6 bis 9 eingestellt wird und die Polymer-Dispersion im Anschluss durch Scherung und/oder Ausfrieren und/oder Trocknung koaguliert wird.

Bevorzugte Polymerlatices sind anionisch-stabilisierte Polychloroprendispersionen mit einem Anteil an polymerisiertem Chloropren am Feststoff der Gesamtdispersion von > 50 %.

Die erfindungsgemäß hergestellten Polymerlatices lassen sich unter Einspaarung von > 10 %, bevorzugt > 20 %, besonders bevorzugt > 30% des sonst benötigten Waschwassers ohne Qualitätseinbußen zu Feststoffen aufarbeiten.

Die erfindungsgemäß hergestellten Polymerlatices zeigen eine um > 5 %, bevorzugt >15 %, besonders bevorzugt > 30% geringere Neigung zur Verschmutzung im Aufarbeitungsprozess gegenüber herkömmlichen Neutralisationsverfahren.

Durch die Verwendung von Kohlendioxid als Destabilisierungsmittel können um > 2 %, bevorzugt > 5 %, besonders bevorzugt > 10 % höhere Feststoffkonzentrationen in der Polymerdispersion als aktuell üblich, unter Beibehaltung geringerer Verschmutzungstendenz und niedrigerem Waschwasserbedarf aufgearbeitet werden, wodurch Produktionseffizienzsteigerungen um > 5 %, bevorzugt > 10 %, besonders bevorzugt > 15% in der Raum-Zeit-Ausbeute von Feststoff möglich sind.

Durch den Bedarf geringerer Mengen an Waschwasser wird automatisch der Wassergehalt der ausgefrorenen Polymerfilme im Gefrierkoagulationsverfahren verringert, wodurch die notwendige eingesetzte Energie für den Trocknungsprozess der, > 40 % Wasser enthaltenden Filme pro kg Festprodukt, um > 5 %, bevorzugt > 10 %, besonders bevorzugt 15 % reduziert wird.

Durch Reduktion der notwendigen Energie zur Trocknung der Produkte zeigen diese eine geringere Verfärbung im Vergleich zu herkömmlich hergestellten Produkten, alternativ kann bei gleichem Energieeintrag die Bandgeschwindigkeit im Trocknungsofen erhöht werden.

Durch Einsatz geringerer Energiemengen wird die Bildung von sogenannten Teerflecken aus Harzkondensation und Oxidation bei der Trocknung im Trockner reduziert, wodurch sich sowohl die Farbqualität des Endproduktes verbessert, welche typischerweise durch Abtropfen der kondensierten Teerflecken auf das Endprodukt beeinträchtigt wird, als auch die Notwendigkeit zur aufwendigen und teuren Trocknerreinigung reduziert wird.

Die Menge benötigter Säure bei Einsatz von Kohlensäure mittels Eintrag von gasförmigen Kohlendioxids in die wässrige Dispersion ist deutlich geringer als bei allen für diesen Prozess beschriebenen organischen und anorganischen Säuren. Zusätzlich ist die Wasserlöslichkeit der Produkte und Flüchtigkeit der nicht umgesetzten Säure deutlich höher. Kohlendioxid kann als Gas in bis zu 100 %iger Form eingetragen werden, wodurch eine Verdünnung der Polymerdispersion vermieden wird. Weiterhin erfolgt die pH-Wert Einstellung präziser und gleichmäßiger in der gesamten Polymerdispersion und lokale Überkonzentrationen, die zu frühzeitiger Koagulatbildung und Verschmutzung führen, werden weitgehend vermieden.

Der Einsatz von gasförmigen Kohlendioxid ist weiterhin vorteilhaft, weil weder organische Säuren mit der Gefahr eines VOC und Geruchspotentials, wie die hauptsächlich für diesen Zweck eingesetzte Essigsäure, noch anorganische Säuren mit extremem Verdünnungsbedarf (z.B. HCl, HNO3, H2SO4, H3PO4) benötigt werden.

Die Rückstände der Neutralisation mit Kohlendioxid sind deren Natrium- und Kalium-Salze, welche eine hervorragende Wasserlöslichkeit, sowie in den extrem geringen Einsatzmengen von 0,5 g bis 15 g CO₂, bevorzugt 2 bis 12 g CO₂, besonders bevorzugt 4 bis 10 g CO₂/kg Polymerfeststoff zum größten Teil ausgewaschen werden und keinen negativen Einfluss in Rückstandsmengen von < 5 g, bevorzugt <2 g, besonders bevorzugt <1 g, als Natrium- und Kaliumcarbonate/kg Feststoff auf die Produkteigenschaften auch bei reduzierter Waschwassermenge ausüben.

Mittels Kohlendioxid können vorteilhaft sowohl Polychloroprendispersionen für den Ausfrierprozess destabilisiert werden, als auch Dispersionen koaguliert sowie unter Scherung gefällt werden, um sie einer Entwässerungsschnecke zuzuführen.

Des Weiteren kann Kohlendioxid genutzt werden, um in einem Sprühtrocknungsverfahren Polychloroprenpulver kostengünstig und effizient herzustellen, wobei das Kohlendioxid nicht nur in den Strom der Polymerdispersion mit eingegast wird, sondern im Bedarfsfall auch zusätzlich die Atmosphäre im Sprühturm stellen kann.

Vorteilhaft beim Einsatz von Kohlendioxid ist darüber hinaus, dass dieses aus Kohlendioxid neutralen Quellen bezogen wird und durch Einsatz zum Teil in eine gebundene Form überführt wird, womit eine positive Kohlendioxid-Bilanz erhalten wird.

Überschüssiges Kohlendioxid kann in dem erfindungsgemäßen Verfahren aus dem Produkt ausgasen. Aufgrund der geringen Einsatzmengen und Nichtbrennbarkeit des Kohlendioxid besteht keine Gefahr für Umwelt und Produktionsmannschaft.

Im erfindungsgemäßen Verfahren kann Kohlendioxid auch in Kombination mit anderen organischen und anorganischen Säuren eingesetzt werden, wobei der Einsatzanteil von Kohlendioxid am Verfahren 1 g, bevorzugt 2 g, besonders bevorzugt 3 g/kg Polymerfeststoff nicht unterschreitet.

Gegenstand der vorliegenden Erfindung sind auch Feststoffe erhältlich aus Polymerdispersionen, erhältlich nach dem erfindungsgemäßen Verfahren.

Die nach dem erfindungsgemäßen Verfahren hergestellten Polymer-Feststoffe weisen einen Restgehalt an Essigsäure bzw. dem Natrium- oder Kalium-Salz der Essigsäure im Endprodukt von < 1000, bevorzugt < 500, besonders bevorzugt < 100 ppm auf.

Die nach dem erfindungsgemäßen Verfahren hergestellten Polymer-Feststoffe enthalten eine Menge aus der Summe aus Natrium- und Kaliumcarbonat im resultierenden Polymerfeststoff von > 5 bis < 20000 ppm, bevorzugt > 20 bis < 10000 ppm und besonders bevorzugt > 50ppm bis < 5000 ppm.

Bevorzugt erfolgt die Eintragung der geeigneten Mengen von Kohlendioxid im erfindungsgemäßen Verfahren in den Latexstrom in kontinuierlicher Weise. Dabei kann das Kohlendioxid eingedüst, überlagert, mittels statischer und dynamischer Mischaggregate im Gegenstromverfahren und/oder im Gleichstromverfahren oder nach allen technisch bekannten Gas-Flüssigkeitsmischverfahren eingetragen werden.

Erfindungsgemäß kann dabei die online Kontrolle der Einmischmenge sowohl volumetrisch über den Kohlendioxid Verbrauch, als auch über eine pH-Messung der Polymerdispersion erfolgen.

Bevorzugt wird der Eintrag von Kohlendioxid in die Polymerdispersion so gesteuert, dass die Ausbeute an Kohlendioxid zur Neutralisationsreaktion > 20 %, bevorzugt >40 %, besonders bevorzugt >50 % ist.

Der Einmischprozess des erfindungsgemäßen Verfahrens wird bevorzugt bei lokalen Drücken am Eintragungsort von < 80 bar, bevorzugt <60 bar, besonders bevorzugt <20 bar durchgeführt.

Die uncompoundierten Polymer-Feststoffe, erhältlich nach den erfindungsgemäßen Verfahren, werden in der Kautschuk und Klebstoffindustrie zur Herstellung von Kautschukvulkanisaten und Klebstoffen verwendet.

## Patentansprüche

1. Verfahren zur Herstellung von Polymerfeststoffen, **dadurch gekennzeichnet, dass** eine Polymer-Dispersion mit einem Ausgangs-pH-Wert größer 9 mittels gasförmigen Kohlendioxids auf einen pH-Wert von 6 bis 9 eingestellt wird und die Polymer-Dispersion im Anschluss durch Scherung und/oder Ausfrieren und/oder Trocknung koaguliert wird.

2. Verfahren gemäß Anspruch 1, **dadurch gekennzeichnet, dass** die Polymerdispersion eine anionisch-stabilisierte Polychloroprendispersion mit einem Anteil an polymerisiertem Chloropren am Feststoff der Gesamtdispersion von > 50 % ist.

3. Verfahren gemäß Anspruch 1, **dadurch gekennzeichnet, dass** die Eintragung der geeigneten Mengen von Kohlendioxid in den Latexstrom in kontinuierlicher Weise erfolgt.

4. Polymerfeststoffe erhältlich gemäß Anspruch 1.

5. Polymerfeststoffe gemäß Anspruch 4, **dadurch gekennzeichnet, dass** diese einen Restgehalt an Essigsäure bzw. dem Natrium- oder Kalium-Salz der Essigsäure im Endprodukt von < 1000 ppm aufweisen.

6. Polymerfeststoffe gemäß Anspruch 4, **dadurch gekennzeichnet, dass** diese eine Menge aus der Summe aus Natrium- und Kaliumcarbonat im resultierenden Polymerfeststoff von > 5 bis < 20000 ppm enthalten.

7. Verwendung der Polymerfeststoffe gemäß Anspruch 4 zur Herstellung von Kautschukvulkanisaten und Klebstoffen.
